# EUROPÄISCHE PATENTSCHRIFT

(11) **EP 1 309 508 B1**
(45) Veröffentlichungstag und Bekanntmachung des Hinweises auf die Patenterteilung: **10.01.2007**
(21) Anmeldenummer: 01960021.2
(22) Anmeldetag: 09.08.2001
(51) Int. Cl.: B66B 9/04

(54) **HYDRAULISCHER AUFZUG MIT EINEM DRUCKSPEICHER**
HYDRAULIC LIFT WITH AN ACCUMULATOR
ASCENSEUR HYDRAULIQUE POURVU D'UN ACCUMULATEUR DE PRESSION

(30) Priorität: 18.08.2000 CH 161100
(43) Veröffentlichungstag der Anmeldung: 14.05.2003
(73) Patentinhaber: Bucher Hydraulics AG, 6345 Neuheim/Zug (CH)
(72) Erfinder: MOSER, Daniel, CH-6313 Menzingen (CH)
(86) Internationale Anmeldenummer: PCT/CH2001/000489
(87) Internationale Veröffentlichungsnummer: WO 2002/014199

(56) Entgegenhaltungen:
- DE-A- 4 034 666
- DE-A- 19 952 036
- US-A- 5 281 774

## Beschreibung

Die Erfindung bezieht sich auf einen hydraulischen Aufzug.

Solch ein hydraulischer Aufzug ist beispielsweise aus der DE-A1-40 34 666 bekannt. Zwischen dem hydraulischen Antrieb für die Aufzugskabine und dem in dieser Schrift Ausgleichsaufzug genannten Druckspeicher wird mittels einer Pumpe Hydrauliköl gefördert. In den Leitungen von der Pumpe zum Antrieb und von der Pumpe zum Druckspeicher ist je ein Geschwindigkeits-Einstellventil angeordnet, mit denen die Fahrkurve gesteuert werden kann. Offenbart ist weiter, daß die Pumpe von einem elektrischen Motor angetrieben wird, der von einem Inverter angesteuert wird.

In EP-A1-829 445 ist eine Vorrichtung gezeigt, bei der unter bestimmten Bedingungen der mit der Pumpe gekoppelte Motor als Generator wirkt, so daß überschüssige hydraulischer Energie in elektrische Energie umgewandelt, also zurückgewonnen werden kann.

Aus US-A-5,281,774 ist eine Steuereinrichtung für einen hydraulischen Aufzug bekannt, bei der der die Pumpe antreibende elektrische Motor mit einem Inverter gesteuert wird.

Ein hydraulischer Aufzug mit einem Druckspeicher ist auch aus US-A-5,579,868 bekannt. Bei diesem Aufzug ist bei einer der Ausgestaltungen zwischen den hydraulischen Antrieb für den Aufzug und den Druckspeicher eine erste Pumpe geschaltet, mit der der Fluß des Hydrauliköls zwischen dem hydraulischen Antrieb und dem Druckspeicher beeinflußbar wird. Mit der ersten Pumpe ist ein Hydromotor gekoppelt, durch den ein regelbarer Teilstrom des Hydrauliköls zum Tank fließt, wobei aus der Druckdifferenz beim Entspannen des Hydrauliköls vom hydraulischen Antrieb bzw. Druckspeicher zum drucklosen Tank Energie gewonnen wird, die beim Betrieb der ersten Pumpe ausgenutzt wird. Mittels einer zweiten Pumpe ist Hydrauliköl vom Tank zum Druckspeicher förderbar, um den Druckspeicher immer wieder aufzuladen.

Aus WO 98/34868 ist es bekannt, die Pumpe zum Fördern von Hydrauliköl bei einem hydraulischen Aufzug durch einen elektronischen Leistungssteller zu betreiben. Solche Leistungssteller sind unter dem Begriff Frequenzumnchter bekannt.

Der Erfindung liegt die Aufgabe zugrunde, die hydraulische Schaltung zu vereinfachen und den Bedarf an elektrischer Energie, insbesondere den Spitzenbedarf, also die elektrische Anschlußleistung, zu senken.

Die genannte Aufgabe wird erfindungsgemäß durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: ein Schema eines hydraulischen Aufzugs,
- Fig. 2: ein Schema einer vorteilhaften Variante dazu,
- Fig. 3: ein Schema für eine besondere Ausgestaltung und
- Fig. 4: ein Schema einer besonders vorteilhaften Lösung.

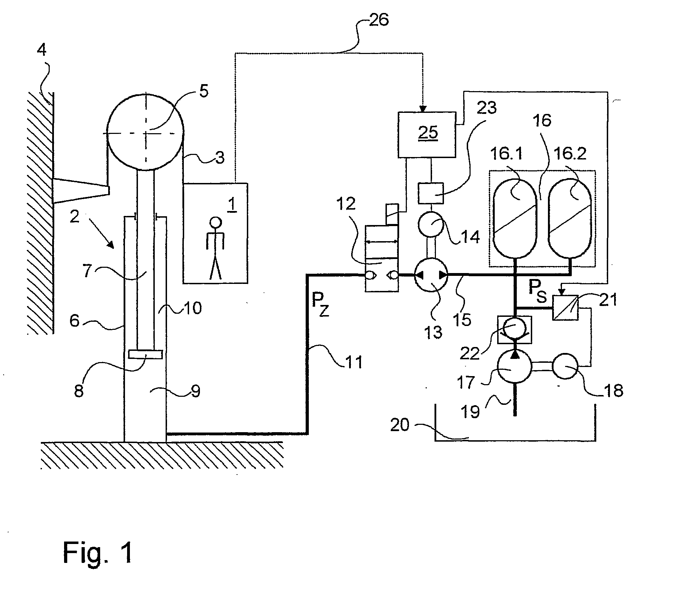

In der Fig. 1 ist mit der Bezugszahl 1 eine Aufzugskabine bezeichnet, die von einem hydraulischen Antrieb 2 bewegbar ist. Die Kraftübertragung vom hydraulischen Antrieb 2 auf die Kabine 1 erfolgt in bekannter Weise mittels eines Seiles 3, das über eine am hydraulischen Antrieb 2 befestigte Rolle 5 umgelenkt wird. Das eine Ende des Seiles 3 ist an einem Gebäudeteil 4 befestigt, kann aber auch an den nicht dargestellten Führungsschienen für die Aufzugskabine 1 befestigt sein. Bekannte abweichende Anordnungen von Seil 3 und Rollen 5 sind im Rahmen der Erfindung möglich. Diesbezüglich zeigt die Fig. 1 lediglich ein Beispiel. Auch der direkte Antrieb der Kabine 1 durch den hydraulischen Antrieb, wie in WO/34868 gezeigt, ist möglich.

Der hydraulische Antrieb 2 besteht aus einem Zylinder 6, in dem ein an einer Kolbenstange 7 befestigter Kolben 8 bewegbar ist. Das dem Kolben 8 gegenüber liegende Ende der Kolbenstange 7 trägt die Rolle 5. Der Innenraum des Zylinders 6 wird durch den Kolben 8 unterteilt in einen ersten Druckraum 9 und einen zweiten Druckraum 10. Der Antrieb 2 des dargestellten Ausführunosbeispiels ist ein sogenannter Plungerzylinder, bei dem die beiden Druckräume 9 und 10 verbunden sind. Am Kolben 8 ist also keine Dichtung gegen die Innenwand des Zylinders 6 vorhanden, sondern lediglich eine hier nicht dargestellte Führung. An der Stelle, wo die Kolbenstange 7 aus dem hydraulischen

Antrieb 2 heraustritt, befindet sich eine Dichtung, so daß der Druckraum 10 abgedichtet ist. Bei dieser Zylinderbauart entspricht der hydraulisch wirksame Querschnitt dem Querschnitt der Kolbenstange 7.

An den ersten Druckraum 9 ist eine Zylinderleitung 11 angeschlossen, die diesen Druckraum 9 mit einem Ventil 12 verbindet. Dieses Ventil 12 ist erfindungsgemäß ein elektrisch ansteuerbares AUF-ZU-Ventil, also beispielsweise ein Magnetventil. Das Ventil 12 ist andererseits mit einer Pumpe 13 verbunden, die von einem elektrischen Motor 14 angetrieben wird. An die Pumpe 13 ist andererseits über eine Speicherleitung 15 gemäß der allgemeinen Erfindungsidee ein Druckspeicher 16 unmittelbar angeschlossen, der aus mindestens einem Speicher 16.1 besteht. Dargestellt ist ein weiterer Speicher 16.2, der parallel zum ersten Speicher 16.1 angeschlossen ist. Die Zahl der im Druckspeicher 16 enthaltenen Speicher 16.1, 16.2, 16.n richtet sich in vorteilhafter Weise beispielsweise nach dem benötigten Speichervolumen, das mit dem von der Kabine 1 zurückzulegenden maximalen Weg zusammenhängt. Je größer der maximal mögliche Weg ist, desto mehr Speicher 16.1, 16.2, 16.n sind im Druckspeicher 16 enthalten. Als Druckspeicher 16 kommen sowohl Blasenspeicher als auch Kolbenspeicher in Betracht.

Ein Zweig der Speicherleitung 15 führt zu einer Ladepumpe 17, die vom einem Elektromotor 18 angetrieben wird. Die Ladepumpe 17 ist außerdem über eine Tankleitung 19 mit einem Tank 20 verbunden. Mittels der Ladepumpe 17 ist Hydrauliköl vom Tank 20 in den Druckspeicher 16 förderbar. Vorteilhaft wird der die Ladepumpe 17 antreibende Elektromotor 18 durch einen Druckschalter 21 automatisch gesteuert. Der Druckschalter 21 liegt an der Speicherleitung 15 an, erfaßt also deren Druck, der mit P_{S} bezeichnet ist. Sinkt der Druck P_{S} unter einen vorgegebenen unteren Wert, so schaltet der Druckschalter 21 den Elektromotor 18 ein, so daß dann die Ladepumpe 17 Hydrauliköl vom Tank 20 in den Druckspeicher 16 fördert, wodurch der Druck P_{S} so lange erhöht wird, bis der Druck P_{S} einen vorgegebenen oberen Wert erreicht, wonach dann die Ladepumpe 17 wieder ausgeschaltet wird. Die Ladepumpe 17 muß also nur dann laufen, wenn der Druck P_{S} im Druckspeicher 16 zu klein ist. Der Druck P_{S} kann einerseits wegen unvermeidlicher Leckverluste über die Ladepumpe 17 absinken, andererseits durch Absinken der Temperatur des Hydrauliköls durch Umgebungseinflüsse. Steigt durch solche Umgebungseinflüsse die Temperatur des Hydrauliköls an, so steigt der Druck P_{S} an. Da ein solcher Temperaturanstieg nie sehr schnell geschieht, ist es auch in der Regel nicht nötig, zwischen dem Druckspeicher 16 und dem Tank 20 ein Überdruckventil vorzusehen, durch das Hydrauliköl bei steigendem Druck P_{S} in den Tank 20 abgelassen werden kann. Die Leckverluste der Ladepumpe 17 reichen an sich aus, um den Druck P_{S} nicht zu stark ansteigen zu lassen. Gleichwohl kann aus Sicherheitsgründen ein solches Überdruckventil vorhanden sein. Vorteilhaft ist zwischen Ladepumpe 17 und Speicher 16 ein Rückschlagventil 22 angeordnet. Nicht gezeichnet und beschrieben sind weitere sicherheitsrelevante Anlagenteile wie Rohrbruchsicherung und Notablaß, weil solche Elemente nicht relevant im Hinblick auf das Wesen der Erfindung sind.

Der Druckspeicher 16 ist, wie schon zuvor erwähnt, ein Blasen- oder ein Kolbenspeicher. Dessen Druck P_{S} ändert sich in Abhängigkeit von der Bewegung der Kabine 1. Für die Steuerung bzw. Regelung von Weg und Geschwindigkeit der Kabine 1 wirkt sich dies aber nicht nachteilig aus. Bei der Regelung von Weg und Geschwindigkeit der Kabine 1 wird in bekannter Weise beispielsweise das Signal eines in der Zylinderleitung 11 plazierten, hier nicht dargestellten Durchflußmessers berücksichtigt. Sie kann aber auch mittels eines Meßwertgebers für die Drehzahl des Motors 14 oder die Geschwindigkeit der Kabine 1 erfolgen.

Die vorgegebenen Werte, bei denen der Druckschalter 21 den Elektromotor 18 ein- bzw. ausschaltet, können vorteilhaft durch das Steuer- und Regelgerät 25 veränderbar sein.

In der Zylinderleitung 11 herrscht ein Druck P_{Z}, der dem Druck im ersten Druckraum 9 des hydraulischen Antriebs 2 entspricht. Dieser Druck korreliert mit der Last der Kabine 1.

Weil erfindungsgemäß die Pumpe 13 zwischen der Zylinderleitung 11 und der Speicherleitung 15 angeordnet ist, wirkt dann, wenn sich beim Betrieb des Aufzugs das Ventil 12 in der Stellung "AUF" befindet, auf die Pumpe 13 einerseits unmittelbar der Druck P_{Z} in der Zylinderleitung 11 und somit im hydraulische Antrieb 2 und andererseits unmittelbar der Druck P_{S} in der Speicherleitung 15 und somit im Druckspeicher 16. Gegenüber dem vorbekannten Stand der Technik sind also Einstellventile zur Regelung der Geschwindigkeit nicht erforderlich. Die hydraulische Schaltung ist also gegenüber diesem Stand der Technik vereinfacht. Die zum Betrieb der Pumpe 13 nötige elektrische Antriebsenergie für den die Pumpe 13 antreibenden Motor 14 korreliert demgemäß mit der Druckdifferenz P_{Z} - P_{S}, wenn die Pumpe 13 Hydrauliköl vom Druckspeicher 16 in den hydraulischen Antrieb 2 fördert, bzw. mit der Druckdifferenz P_{S} - P_{Z}, wenn die Pumpe 13 Hydrauliköl vom hydraulischen Antrieb 2 zum Druckspeicher 16 fördert. Die Druckdifferenz P_{S} - P_{Z} bzw. P_{Z} - P_{S} kann durchaus negativ sein, so daß dann die Pumpe 13 durch die Druckdifferenz ihrerseits angetrieben wird. Dadurch kann der Motor 14 als Generator wirken, wie dies schon bekannt ist. Damit eine solche Energierückgewinnung vorteilhaft möglich ist, wird der Motor 14 in bekannter Weise durch einen Leistungssteller 23 betrieben, der beispielsweise ein Frequenzumrichter ist. Der Leistungssteller 23 wird von einem Steuer- und Regelgerät 25 angesteuert, welches seinerseits von einer nicht dargestellten Aufzugssteuerung Befehle erhält. Dargestellt ist lediglich eine Steuerleitung 26, über die die Befehle von den Bedientableaus der Aufzugsanlage an das Steuer- und Regelgerät 25 übermittelt werden.

Steht die Kabine 1 des Aufzugs still, so ist das Ventil 12, angesteuert vom Steuer- und Regelgerät 25, geschlossen. Damit wirkt über dem Ventil 12 die Druckdifferenz P_{S} - P_{Z} bzw. P_{Z} - P_{S}, nicht jedoch über der Pumpe 13.

Soll sich die Kabine 1 abwärts bewegen, so wird durch das Steuer- und Regelgerät 25 das Ventil 12 geöffnet und der Motor 14 in seiner ersten Drehrichtung betrieben, daß die Pumpe 13 Hydrauliköl vom Druckraum 9 in den Druckspeicher 16 fördert. Dabei wirkt über der Pumpe 13 die Druckdifferenz P_{S} - P_{Z}. Das bedeutet gleichzeitig, daß elektrische Energie für den Betrieb des Motors 14 nur so lange aufgewendet werden muß, solange der Druck P_{Z} kleiner ist als der Druck P_{S}. Weil ein Geschwindigkeits-Einstellventil verzichtbar ist, entsteht auch ein entsprechender Druckverlust nicht.

Soll sich die Kabine 1 aufwärts bewegen, so wird durch das Steuer- und Regelgerät 25 das Ventil 12 ebenfalls geöffnet und der Motor 14 in seiner zweiten Drehrichtung betrieben, daß die Pumpe 13 Hydrauliköl vom Druckspeicher 16 in den Druckraum 9 fördert. Dabei wirkt über der Pumpe 13 die Druckdifferenz P_{Z} - P_{S}. Das bedeutet gleichzeitig, daß elektrische Energie für den Betrieb des Motors 14 nur so lange aufgewendet werden muß, solange der Druck P_{S} kleiner ist als der Druck P_{Z}.

Da erfindungsgemäß grundsätzlich nur eine der jeweiligen Druckdifferenz P_{S}- P_{Z} bzw. P_{Z} - P_{S} entsprechende elektrische Antriebsleistung aufgewendet werden muß, kann der elektrische Anschlußwert für den Motor 14 sehr viel kleiner sein als bei herkömmlichen hydraulischen Schaltungen. Folglich ist auch der zum Betrieb nötige Motor 14 auf eine kleinere Nennleistung auszulegen. Damit entstehen Kostenvorteile für den Motor 14 selbst, bei Anschlußwert-Tarifierung durch den kleineren Anschlußwert und bei Leistungs-Tarifierung durch den kleineren Verbrauch an elektrischer Energie. Es wird nach der Erfindung auch vermieden, daß einmal mittels einer Pumpe auf hohen Druck gebrachtes Hydrauliköl wieder in Richtung Tank 20 entspannt wird und dabei seine potentielle Energie abgibt bzw. verliert.

Vorteilhaft ist weiter, daß der Tank 20 klein bemessen sein kann. Er dient eigentlich nur dazu, eine Differenzmenge an Hydrauliköl aufzunehmen, die den Leckageverlusten entspricht.

Die erfindungsgemäße Lösung hat außerdem den bemerkenswerten Vorteil, daß zum

Betrieb des hydraulischen Aufzugs kein proportional vorsteuerbares Ventil erforderlich ist. Bei vielen herkömmlichen hydraulischen Aufzugsanlagen sind getrennte vorsteuerbare Ventile für die Aufwärts- und die Abwärtsfahrt vorhanden. Dieser Aufwand wird durch die Erfindung vermieden. Die Steuer- bzw. Regelkette ist damit auch sehr einfach und übersichtlich, weil nur mittels eines einzigen Elements, nämlich mittels des Motors 14, die Geschwindigkeit der Kabine 1 gesteuert bzw. geregelt wird.

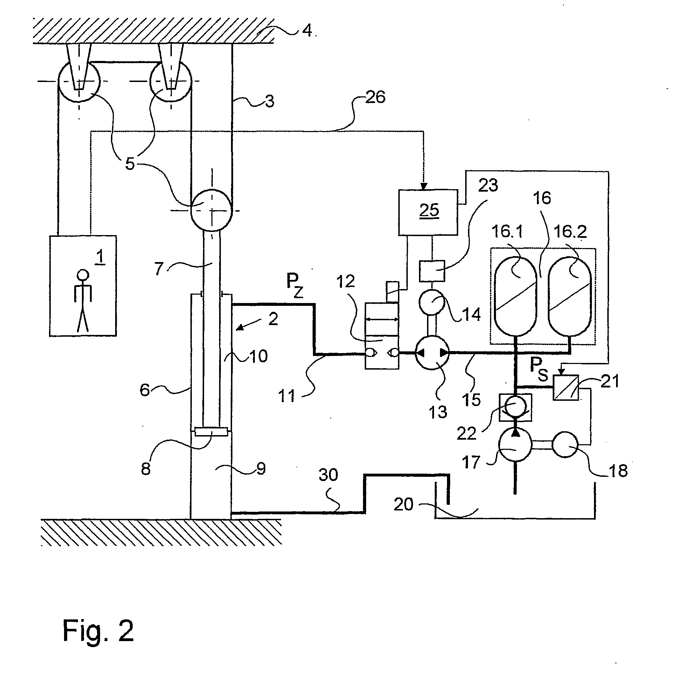

In der Fig. 2 ist ein zweites Ausführungsbeispiel gezeigt, daß sich vom Beispiel der Fig. 1 darin unterscheidet, daß die Zylinderleitung 11 nicht an den ersten Druckraum 9 des hydraulischen Antriebs 2 angeschlossen ist, sondern an den zweiten Druckraum 10. Dabei ist der Druckraum 10 dort, wo die Kolbenstange 7 aus dem hydraulischen Antrieb 2 heraustritt, abgedichtet. Diese Ausführungsvariante ist in mehrerer Hinsicht vorteilhaft. Der Querschnitt des zweiten Druckraums 10 ist wegen der Kolbenstange 7 kleiner als der Querschnitt des ersten Druckraums 9. Damit muß weniger Hydrauliköl zwischen dem hydraulischen Antrieb 2 und dem Druckspeicher 16 umgepumpt werden, um eine bestimmte Bewegung der Kabine 1 zu erreichen. Das bedeutet gleichzeitig, daß das Volumen des Druckspeichers 16 kleiner bemessen werden kann. Ganz wesentlich ist aber, daß die Kolbenstange 7 nicht auf Knickung belastet ist, weil es sich hier um einen Zugzylinder handelt.

Bei dieser Bauart des Antriebs 2 ist der Druckraum 9 gegenüber dem Druckraum 10 durch eine am Kolben 8 angeordnete Dichtung abgedichtet. Das heißt auch, daß die zylindrische Innenwandung des Zylinders 6 bearbeitet sein muß.

Gleichzeitig erfolgt die Kraftübertragung vom hydraulischen Antrieb 2 auf die Kabine 1 in anderer, aber ebenfalls bekannter Weise. Sie erfolgt mit Hilfe des Seils 3, das über an dem Gebäudeteil 4 bzw. am hydraulischen Antrieb 2 befestigten Rollen 5 umgelenkt wird. Die Rollen 5 können statt am Gebäudeteil 4 beispielsweise auch an einem Träger am oberen Ende von Führungsschienen befestigt sein.

Ansonsten unterscheidet sich die Ausführung nach Fig 2. von jener nach Fig. 1 noch dadurch, daß eine zusätzliche Leitung 30 dargestellt ist, die den ersten Druckraum 9 mit dem Tank 20 verbindet. Über den Kolben 8 aus dem zweiten Druckraum 10 in den ersten Druckraum 9 übertretendes Hydrauliköl wird damit in den Tank 20 abgeleitet.

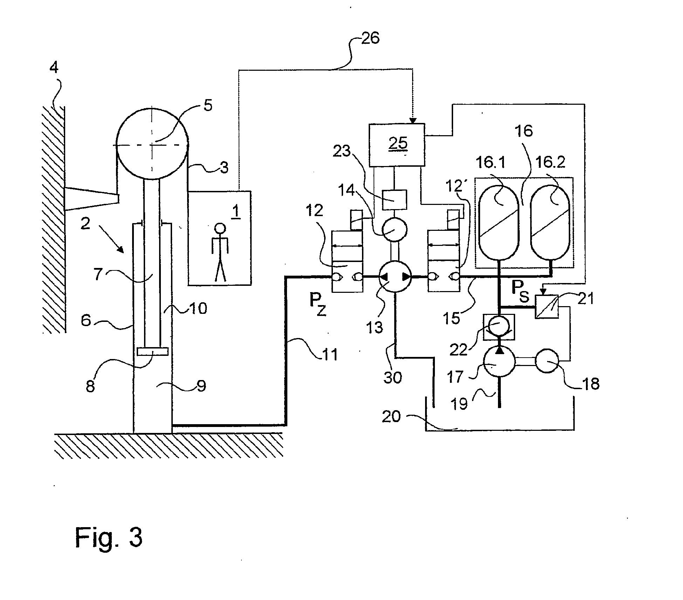

In der Fig. 3 ist eine besondere Ausgestaltung für das Ausführungsbeispiel der Fig. 1 gezeigt. Hier ist ein AUF-ZU-Ventil von der Art der Ventils 12 auch in der Speicherleitung 15 angeordnet. Dieses dem Ventil 12 wirkungsgleiche Ventil ist mit der Bezugszahl 12' bezeichnet. Wie das Ventil 12 wird auch das Ventil 12' in die Stellung "AUF" gesteuert, wenn die Kabine 1 bewegt werden soll. Dieses zusätzliche Ventil 12' wird vorteilhaft dann vorgesehen, wenn die Pumpe 13 von einer Bauart ist, bei der Leckageverluste auftreten, wenn die Pumpe 13 mit Druck beaufschlagt ist. Ohne das Ventil 12' muß die Pumpe 13 leckagefrei sein. Solche leckagefreien Pumpen 13 sind aber teurer. Das zusätzliche Ventil 12' ermöglicht also in vorteilhafter Weise die Anwendung einer einfachen, nicht leckagefreien Pumpe 13. Das durch Leckage aus der Pumpe 13 austretende Hydrauliköl wird mittels einer Leckageleitung 30 in den Tank 20 zurückgeführt. Dadurch, daß beim Stillstand des Aufzugs die Ventile 12 und 12' in der Stellung "ZU" sind, tritt dann keine Leckage an der Pumpe 13 mehr auf, sobald der Druck abgebaut ist. Durch das beim Stillstand des Aufzugs geschlossene Ventil 12' wird bei Verwendung einer nicht leckagefreien Pumpe 13 sicher verhindert, daß sich der Druck im Druckspeicher 16 durch Leckage an der Pumpe 13 abbaut.

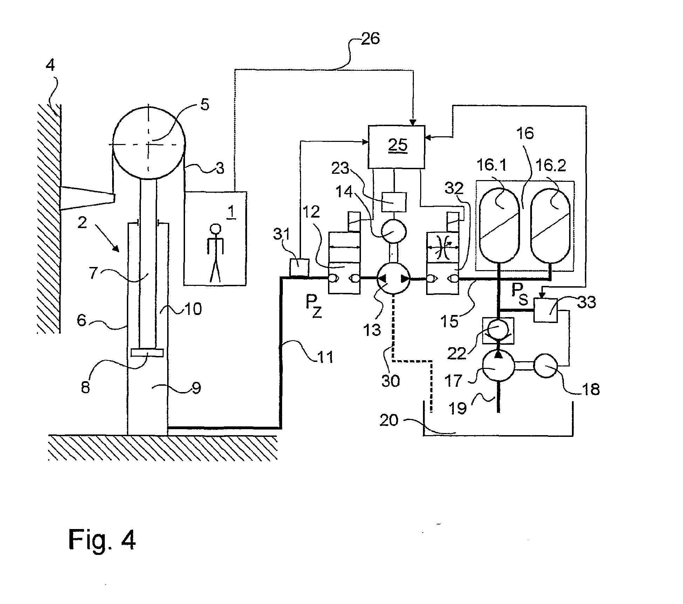

In der Fig. 4 ist eine besonders vorteilhafte Ausgestaltung gezeigt. Von der Lösung nach der Fig. 1 unterscheidet sich die Lösung einmal dadurch, daß an der Zylinderleitung 11 ein Lastdrucksensor 31 angeordnet ist, dessen Signal dem Steuer- und Regelgerät 25 zugeleitet wird. Der Lastdrucksensor 31 ermittelt also den Druck P_{Z}, der mit der momentanen Belastung der Kabine 1 korreliert. Zum anderen unterscheidet sich diese Lösung auch noch dadurch, daß in der Speicherleitung 15 ein Druckregelventil 32 angeordnet ist, das vom Steuer- und Regelgerät 25 ansteuerbar ist. Das Ansteuersignal für das Druckregelventil 32 wird vom Steuer- und Regelgerät 25 generiert und zwar unter Berücksichtigung der Signale des Lastdrucksensors 31 und eines Speicherdrucksensors 33, der den Speicherdruck P_{S} erfaßt und gleichzeitig die Funktion des Druckschalter 21 erfüllt. Das Druckregelventil 32 regelt den Druck am speicherseitigen Anschluß der Pumpe 13 auf einen Wert, der identisch ist mit dem Druck P_{Z} in der Zylinderleitung 11. Bei jeder Größe der Belastung der Kabine 1 herrscht dann an beiden Anschlüssen der Pumpe 13 der gleiche Druck P_{Z}. Daraus ergibt sich in außerordentlich vorteilhafter Weise, daß die Pumpe 13 nicht gegen eine Druckdifferenz P_{S} - P_{Z} bzw. P_{Z} - P_{S} arbeiten muß. Die von der Pumpe 13 aufzubringende Leistung entspricht damit nur den Reibungsverlusten bei der Bewegung der Kabine 1, die sich aus mehreren Komponenten zusammensetzt und die Reibung im hydraulischen Antrieb 2, an der Seilführung und an den nicht dargestellten Laufschienen der Kabine 1 sowie kinematische Widerstände beinhaltet. Bei dieser Lösung ist also die von der Pumpe 13 und damit vom Motor 14 aufzubringende Leistung völlig unabhängig von der Beladung der Kabine 1 und nur durch die Reibungsverluste bei Bewegung bestimmt. Gegenüber der allgemeinen Erfindungsidee ist also die aufzubringende Leistung nochmals deutlich vermindert und nähert sich dem theoretisch möglichen Minimum.

Ist die Pumpe 13 von einer nicht leckagefreien Bauart, so ist auch hier die Leckageleitung 30 nötig. Weil dies nur unter diesen Umständen erforderlich ist, ist hier die Leckageleitung 30 gestrichelt gezeichnet. Bei Verwendung einer nicht leckagefreien Bauart ist es auch erforderlich, daß das Druckregelventil 32 die Funktionalität des Ventils 12' mit beeinhaltet. Wird das Druckregelventil 32 vom Steuer- und Regelgerät 25 nicht angesteuert, ist es geschlossen. Erfolgt dagegen eine Ansteuerung durch das Steuer- und Regelgerät 25, so verhält es sich wie eine regelbare Drossel.

Erwähnt sei noch, daß der Speicherdrucksensors 33 die Funktionalität des Druckschalter 21 mit beinhaltet. Dazu gehört dann auch, daß über die Verbindung zwischen dem Steuer- und Regelgerät 25 und dem Speicherdrucksensor 33 Signale in beiden Richtungen laufen: Das Drucksignal vom Speicherdrucksensor 33 zum Steuer- und Regelgerät 25 und die zuvor erwähnte Änderung der vorgegebenen Werte, bei denen der Druckschalter 21 den Elektromotor 18 ein- bzw. ausschaltet, vom Steuer- und Regelgerät 25 zum Speicherdrucksensor 33. In der Fig. 4 ist dies durch Pfeile an der Verbindung gekennzeichnet.

Erwähnt sei hier noch, daß sich die vorteilhaften Lösungen gemäß den Fig. 3 und 4 auch dann anwenden lassen, wenn die hydraulische Schaltung ansonsten jener der Fig. 2 entspricht.

## Patentansprüche

1. Hydraulischer Aufzug mit einem Druckspeicher (16), bei dem der Fluß von Hydrauliköl zwischen einem hydraulischen Antrieb (2) durch eine Zylinderleitung (11) und dem Druckspeicher (16) durch eine Speicherleitung (15) mittels einer Pumpe (13) erzeugbar ist, welche von einem Motor (14) antreibbar ist, der aufgrund von Signalen eines Steuer- und Regelgeräts (25) von einem Leistungssteller (23) betrieben wird, und bei dem der Druckspeicher (16) mittels einer von einem Elektromotor (18) angetriebenen Ladepumpe (17) mit Hydrauliköl aus einem Tank (20) aufladbar ist, wobei die Pumpe (13) einerseits unmittelbar an die ein elektrisch ansteuerbares Ventil (12), das ein AUF-ZU-Ventil ist, beinhaltende Zylinderleitung (11) mit dem hydraulischen Antrieb (2) und andererseits unmittelbar über die Speicherleitung (15) mit dem Speicher (16) verbunden ist.

2. Hydraulischer Aufzug nach Anspruch 1, **dadurch gekennzeichnet, daß** der Druckspeicher (16) aus mindestens einem Speicher (16.1, 16.2, 16.n) besteht.

3. Hydraulischer Aufzug nach einem der Ansprüche 1 oder 2, **dadurch gekennzeichnet, daß** der Motor (18) der Ladepumpe (17) von einem den Druck Pₛ in der Speicherleitung (15) erfassenden Druckschalter (21) automatisch ein- und ausschaltbar ist.

4. Hydraulischer Aufzug nach Ansprüche 3, **dadurch gekennzeichnet, daß** vorgegebene Grenzwerte, bei denen der Druckschalter (21) den Motor (18) der Ladepumpe (17) ein- bzw. ausschaltet, vom Steuer- und Regelgerät (25) veränderbar sind.

5. Hydraulischer Aufzug nach einem der Ansprüche 2 bis 4, **dadurch gekennzeichnet, daß** die Zylinderleitung (11) am ersten Druckraum (9) des hydraulischen Antriebs (2) angeschlossen ist.

6. Hydraulischer Aufzug nach einem der Ansprüche 2 bis 4, **dadurch gekennzeichnet, daß** die Zylinderleitung (11) am zweiten Druckraum (10) des hydraulischen Antriebs (2) angeschlossen ist.

7. Hydraulischer Aufzug nach einem der Ansprüche 3 bis 6, **dadurch gekennzeichnet, daß** zwischen der Ladepumpe (17) und dem Druckspeicher (16) ein Rückschlagventil (22) angeordnet ist.

8. Hydraulischer Aufzug nach einem der Ansprüche 1 bis 7, **dadurch gekennzeichnet, daß** in der Speicherleitung (15) ein weiteres AUF-ZU-Ventil (12') angeordnet ist, die Pumpe (13) von einer nicht leckagefreien Bauart ist, deren Leckageöl über eine Leckageleitung (31) zum Tank (20) rückführbar ist.

9. Hydraulischer Aufzug nach einem der Ansprüche 1 bis 7, **dadurch gekennzeichnet, daß** an der Zylinderleitung (11) ein Lastdrucksensors (31), an der Speicherleitung (15) ein Speicherdrucksensor (33) und im Zuge der Speicherleitung (15) ein Druckregelventil (32) angeordnet sind, wobei das Druckregelventil (32) vom Steuer- und Regelgerät (25) so ansteuerbar ist, daß beidseits der Pumpe (13) ein Druck P_{Z} herrscht, der dem aktuellen Druck in der Zylinderleitung (11) entspricht.

## Claims

1. Hydraulic elevator with a pressure accumulator (16), where the flow of hydraulic oil between a hydraulic drive (2) and the pressure accumulator (16) through a cylinder line (11) and an accumulator line (15) can be produced by a pump (13), which can be driven by a motor (14), which is operated by a power output stage (23) on the basis of signals from a control and regulating unit (25), and where the pressure accumulator (16) can be charged with hydraulic oil from a tank (20) by means of a charging pump (17) driven by an electric motor (18), in which the pump (13) is connected on one side directly to the hydraulic drive (2) by a cylinder line (11) containing an electrically actuated valve (12), which is an OPEN-CLOSED valve, and on the other side directly via the accumulator line (15) to the accumulator (16).

2. Hydraulic elevator according to Claim 1, **characterized in that** the pressure accumulator (16) consists of at least one accumulator unit (16.1, 16.2, 16.n).

3. Hydraulic elevator according to Claim 1 or Claim 2, **characterized in that** the motor (18) of the charging pump (17) can be turned on and off automatically by a pressure switch (21), which detects the pressure Pₛ in the accumulator line (15).

4. Hydraulic elevator according to Claim 3, **characterized in that** preset limit values at which the pressure switch (21) turns the motor (18) of the charging pump (17) on and off can be changed by the control and regulating unit (25).

5. Hydraulic elevator according to one of Claims 2-4, **characterized in that** the cylinder line (11) is connected to the first pressure space (9) of the hydraulic drive (2).

6. Hydraulic elevator according to one of Claims 2-4, **characterized in that** the cylinder line (11) is connected to the second pressure space (10) of the hydraulic drive (2).

7. Hydraulic elevator according to one of Claims 3-6, **characterized in that** a nonreturn valve (22) is installed between the charging pump (17) and the pressure accumulator (16).

8. Hydraulic elevator according to one of Claims 1-7, **characterized in that** an additional OPEN-CLOSED valve (12') is provided in the accumulator line (15); and **in that** the pump (13) is of a type which is not free of leakage, the leakage oil of which can be returned to the tank (20) through a leakage line (31).

9. Hydraulic elevator according to one of Claims 1-7, **characterized in that** a load pressure sensor (31) is installed in the cylinder line (11); **in that** an accumulator pressure sensor (33) is installed in the accumulator line (15); and **in that** a pressure control valve (32) is installed in the accumulator line (15), where the pressure control valve (32) can be actuated by the control and regulating unit (25) in such a way that a pressure P_{z} which corresponds to the current pressure in the cylinder line (11) prevails on both sides of the pump (13).

## Revendications

1. Ascenseur hydraulique pourvu d'un accumulateur de pression (16) dans lequel le flux d'huile hydraulique entre un entraînement hydraulique (2) à travers une conduite de cylindre (11) et l'accumulateur de pression (16) à travers une conduite d'accumulateur (15) peut être généré au moyen d'une pompe (13), laquelle peut être entraînée par un moteur (14) qui est actionné par un actionneur de puissance (23) sur la base de signaux d'un appareil de commande et de régulation (25) et dans lequel l'accumulateur de pression (16) peut être chargé en huile hydraulique provenant d'un réservoir (20) au moyen d'une pompe de charge (17) entraînée par un moteur électrique (18), la pompe (13) étant reliée d'une part directement à l'entraînement hydraulique (2) par la conduite de cylindre (11) contenant une vanne à commande électrique (12) qui est une vanne tout ou rien et d'autre part directement à l'accumulateur (16) par la conduite d'accumulateur (15).

2. Ascenseur hydraulique selon la revendication 1, **caractérisé par le fait que** l'accumulateur de pression (16) se compose d'au moins un accumulateur (16.1, 16.2, 16.n).

3. Ascenseur hydraulique selon l'une des revendications 1 ou 2, **caractérisé par le fait que** le moteur (18) de la pompe de charge (17) peut être mis en marche et arrêté automatiquement par un manocontacteur (21) qui saisit la pression Pₛ dans la conduite d'accumulateur (15).

4. Ascenseur hydraulique selon la revendication 3, **caractérisé par le fait que** des valeurs limites prédéfinies auxquelles le manocontacteur (21) met en marche ou arrête le moteur (18) de la pompe de charge (17) sont modifiables par l'appareil de commande et de régulation (25).

5. Ascenseur hydraulique selon l'une des revendications 2 à 4, **caractérisé par le fait que** la conduite de cylindre (11) est reliée à la première chambre de pression (9) de l'entraînement hydraulique (2).

6. Ascenseur hydraulique selon l'une des revendications 2 à 4, **caractérisé par le fait que** la conduite de cylindre (11) est reliée à la deuxième chambre de pression (10) de l'entraînement hydraulique (2).

7. Ascenseur hydraulique selon l'une des revendications 3 à 6, **caractérisé par le fait qu'**un clapet anti-retour (22) est disposé entre la pompe de charge (17) et l'accumulateur de pression (16).

8. Ascenseur hydraulique selon l'une des revendications 1 à 7, **caractérisé par le fait qu'**une autre vanne tout ou rien (12') est disposée dans la conduite d'accumulateur (15) et la pompe (13) est d'un type de construction non exempt de fuites dont l'huile de fuite peut être ramenée au réservoir (20) par une conduite de fuite (31).

9. Ascenseur hydraulique selon l'une des revendications 1 à 7, **caractérisé par le fait qu'**un capteur de pression de charge (31) est disposé sur la conduite de cylindre (11), un capteur de pression d'accumulateur (33) sur la conduite d'accumulateur (15) et une vanne de régulation de pression (32) sur le parcours de la conduite d'accumulateur (15), la vanne de régulation de pression (32) pouvant être commandée par l'appareil de commande et de régulation (25) de telle manière qu'il règne des deux côtés de la pompe (13) une pression P_{z} qui correspond à la pression actuelle dans la conduite de cylindre (11).
